# EUROPEAN PATENT APPLICATION

(11) **EP 4 645 215 A1**
(43) Date of publication of application: **05.11.2025**
(21) Application number: 22970186.7
(22) Date of filing: 28.12.2022
(51) Int. Cl.: G06T 7/00

(54) **INFORMATION PROCESSING DEVICE, INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: ARAKI, Toshinori, Tokyo 108-8001 (JP); KAKIZAKI, Kazuya, Tokyo 108-8001 (JP); AMADA, Takuma, Tokyo 108-8001 (JP)
(74) Representative: Betten & Resch
(86) International application number: PCT/JP2022/048653
(87) International publication number: WO 2024/142399

(57) **Abstract**

An information processing apparatus includes: a detection unit that detects landmarks from an input video that is inputted; a generation unit that generates a synthetic video by using a still image that is inputted, and the landmarks; and a determination unit that determines whether or not the input video is a synthesized video, based on comparison between the input video and the synthetic video.

## Description

### Technical Field

This disclosure relates to technical fields of an information processing apparatus, an information processing system, an information processing method, and a recording medium.

### Background Art

Patent Literature 1 describes a technology/technique of: detecting a first facial image from a first photographed image photographed by a camera; non-linearly deforming the first facial image by using a template facial image; recording the deformed first facial image as a registered facial image; detecting a second facial image from a second photographed image photographed by a camera; non-linearly deforming the second facial image by using the template facial image; and comparing the deformed second facial image and the registered facial image.

Patent Literature 2 describes a technology/technique of: detecting a first face from an inputted search subject image; calculating and recording a feature value of the detected first face; detecting a second face from an inputted key image used for search; calculating a face angle of the second face; determining a synthesis pattern from the calculated face angle; generating a synthetic facial image according to the determined synthesis pattern; calculating the feature value of the second face using the generated synthetic facial image; searching a database using a plurality of calculated face feature values as a query; and integrating a plurality of the retrieved search results, resulting in less bias in search results even when there is a difference in the angle from which a face is photographed.

Patent Literature 3 describes a technology/technique of: processing a plurality of pieces of moving image data obtained by imaging a subject under different photographic conditions; generating a moving image by synthesizing the processed plurality of pieces of moving image data; including a plurality of operation modes for executing at least one of first subject detection processing and second subject detection processing to any of the processed moving image data and the generated moving image; and switching the operation mode in accordance with a state of the subject or the feature of the captured image.

Patent Literature 4 describes a technology/technique of: accepting the input of multiple pieces of biological information of registration candidates; generating a synthetic image obtained by synthesizing the multiple pieces of biological information of the registration candidates by using generated synthetic functions; storing the generated synthetic image; and, when receiving an authentication request including the synthetic image obtained by synthesizing the multiple pieces of biological information of persons to be authenticated from a terminal equipment, collating the synthetic image with the stored synthetic image.

Patent Literature 5 describes a technology/technique of: when facial image data is acquired, generating facial image data in which noise is removed from the facial image data using a specified algorithm; generating differential image data between the acquired facial image data and the generated facial image data; determining whether or not the acquired facial image data is a combined image on the basis of information included in the differential image data, and if the acquired facial image data is not determined to be a combined image, determining whether or not the acquired facial image data is a combined image on the basis of information included in frequency data generated from the differential image data.

### Citation List

### Patent Literature

Patent Literature 1: International Publication No. WO2015/128961
Patent Literature 2: International Publication No. WO2013/176263
Patent Literature 3: JP2015-012567A
Patent Literature 4: JP2010-044588A
Patent Literature 5: International Publication No. WO2022/162760

### Summary

### Technical Problem

It is an example object of this disclosure to provide an information processing apparatus, an information processing system, an information processing method, and a recording medium that are intended to improve the techniques/technologies disclosed in Citation List.

### Solution to Problem

An information processing apparatus according to an example aspect includes: a detection unit that detects landmarks from an input video that is inputted; a generation unit that generates a synthetic video by using a still image that is inputted, and the landmarks; and a determination unit that determines whether or not the input video is a synthesized video, based on comparison between the input video and the synthetic video.

An information processing system according to an example aspect includes: an information processing apparatus, including: a detection unit that detects landmarks from an input video that is inputted; a generation unit that generates a synthetic video by using a still image that is inputted, and the landmarks; and a determination unit that determines whether or not the input video is a synthesized video, based on comparison between the input video and the synthetic video; a verification unit that verifies at least one of a target captured in the still image and a target captured in the input video; and an authentication unit that authenticates the target, based on at least one of a determination result of the determination unit and a verification result of the verification unit.

An information processing method according to an example aspect includes: detecting landmarks from an input video that is inputted; generating a synthetic video by using a still image that is inputted, and the landmarks; and determining whether or not the input video is a synthesized video, based on comparison between the input video and the synthetic video.

A recording medium according to an example aspect is a recording medium on which a computer program that allows a computer to execute an information processing method is recorded, the information processing method including: detecting landmarks from an input video that is inputted; generating a synthetic video by using a still image that is inputted, and the landmarks; and determining whether or not the input video is a synthesized video, based on comparison between the input video and the synthetic video.

### Brief Description of Drawings

[FIG. 1] FIG. 1 is a block diagram illustrating a configuration of an information processing apparatus in a first example embodiment.
[FIG. 2] FIG. 2 is a block diagram illustrating a configuration of an information processing apparatus in a second example embodiment.
[FIG. 3] FIG. 3 is a flowchart illustrating a flow of an information processing operation of the information processing apparatus in the second example embodiment.
[FIG. 4] FIG. 4 is a block diagram illustrating a configuration of an information processing apparatus in a third example embodiment.
[FIG. 5] FIG. 5 is a flowchart illustrating a flow of the information processing operation of the information processing apparatus in the third example embodiment.

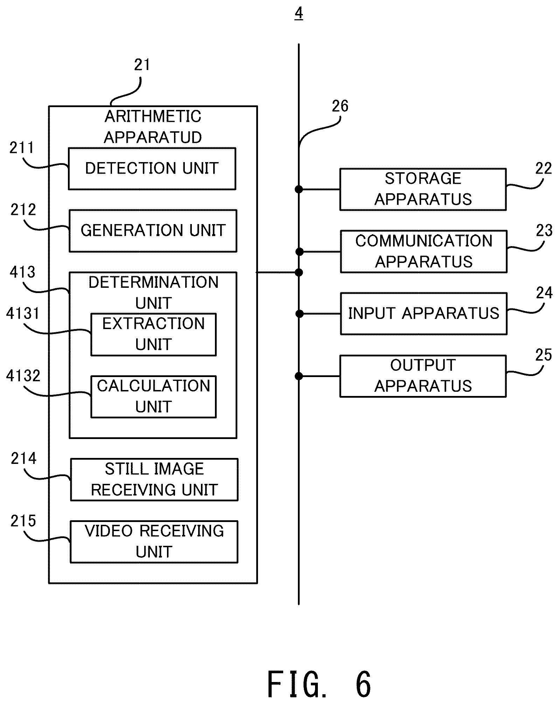

[FIG. 6] FIG. 6 is a block diagram illustrating a configuration of an information processing apparatus in a fourth example embodiment.
[FIG. 7] FIG. 7 is a flowchart illustrating a flow of the information processing operation of the information processing apparatus in the fourth example embodiment.
[FIG. 8] FIG. 8 is a block diagram illustrating a configuration of an information processing system in the fifth example embodiment.
[FIG. 9] FIG. 9 is a flowchart illustrating a flow of an identity verification operation of the information processing system in the fifth example embodiment.

### Description of Example Embodiments

Hereinafter, with reference to the drawings, an information processing apparatus, an information processing system, an information processing method, and a recording medium according to example embodiments will be described.

### [1: First Example Embodiment]

An information processing apparatus, an information processing system, an information processing method, and a recording medium according to a first example embodiment will be described. The following describes the information processing apparatus, the information processing system, the information processing method, and the recording medium according to the first example embodiment, by using an information processing apparatus 1 to which the information processing apparatus, the information processing system, the information processing method, and the recording medium according to the first example embodiment are applied.

### [1-1: Configuration of Information Processing Apparatus 1]

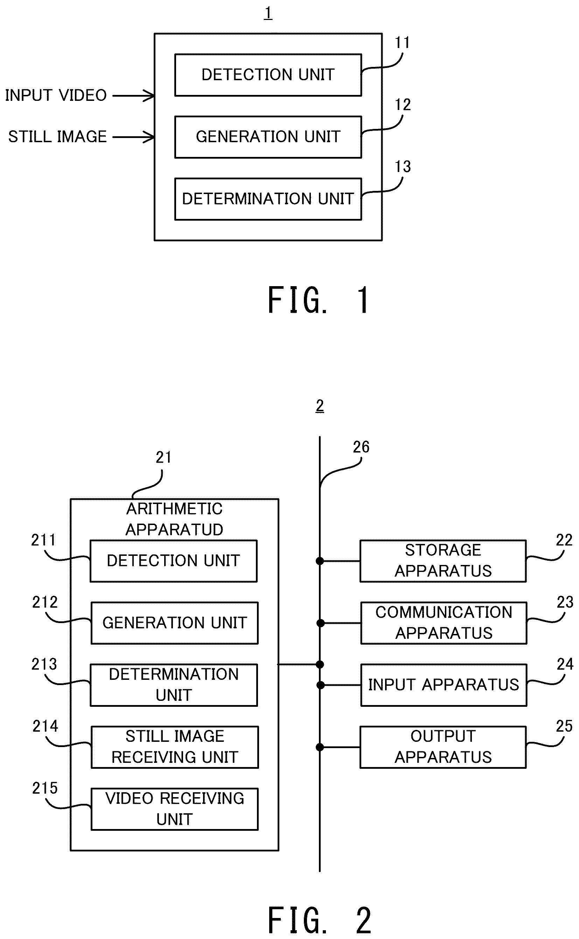

FIG. 1 is a block diagram illustrating a configuration of the information processing apparatus 1 in the first example embodiment. As illustrated in FIG. 1, the information processing apparatus 1 includes a detection unit 11, a generation unit 12, and a determination unit 13.

The detection unit 11 detects landmarks from an input video that is inputted. The generation unit 12 generates a synthetic video by using a still image that is inputted, and the landmarks. The determination unit 13 determines whether or not the input video is a synthesized video, based on comparison between the input video and the synthetic video.

### [1-2: Technical Effect of Information Processing Apparatus 1]

The information processing apparatus 1 in the first example embodiment determines whether or not the input video is a synthesized video, based on the comparison between the input video and the synthetic video generated by using the still image and the landmarks, thereby enabling accurate determination of whether or not the input video is a synthesized video.

### [2: Second Example Embodiment]

Next, an information processing apparatus, an information processing system, an information processing method, and a recording medium according to a second example embodiment will be described. The following describes the information processing apparatus, the information processing system, the information processing method, and the recording medium according to the second example embodiment, by using an information processing apparatus 2 to which the information processing apparatus, the information processing system, the information processing method, and the recording medium according to the second example embodiment are applied.

### [2-1: Fake Video]

There are techniques/technologies for synthesizing an image of a person, based on information from a single facial photograph of the person. For an example of the techniques/technologies for synthesizing an image of a person, deepfake is well known. Deepfake is known for a technique/technology for synthesizing a fake video that depicts an event that does not actually occur. Hereinafter, a video that depicts an event that does not actually occur, may be referred to as a fake video. Additionally, videos depicting events that actually occurs, may be referred to as a real video or authentic video. For example, the real video may include a video that depicts an action performed in front of a camera by a person B who is being captured by the camera. In contrast, the fake video may include a video synthesized as if the action performed in front of the camera by the person B who is being captured by the camera were performed by a different person A from the person B.

There is a technique/technology, called "reenactment", for generating a fake video in which the expression of a person in an original image changes to a desired expression, or a person in an original image faces a desired direction. For example, there is a known a technique/technology for generating a video in which, based on at least one facial image of the person A, the expression of the person A in the facial image is changed to match the expression of the person B, as if the person A were changing the expression (hereinafter sometimes referred to as "conversion of a still image into a video").

By using an original image and an original video, it is possible to convert a still image into a video. The original video may be, for example, a video that depicts the action performed in front of the camera by the person B who is being captured by the camera. The original image may also be a still image in which the person A, who is different from the person B, is captured. In the conversion of a still image into a video, first, landmarks of the original image are detected. Furthermore, landmarks are detected from each of video frames that constitute the original video. Then, for each of the video frames that constitute the original video, the original image is edited to match the landmarks of the original image with the landmarks of the corresponding video frame, thereby generating a synthetic frame. By connecting the generated synthetic frames, the still image may be converted into a video. The landmarks may be characteristic positions of a subject in an image.

For example, it is possible to change a direction, expression, or the like of a face of the person A captured in the original image, by using the landmarks of a face of the person B captured in the original video, thereby synthesizing a video in which the direction, expression, or the like of the face of the person A are changed. The landmarks used to change the direction, expression, or the like of the face of the person may be characteristic parts of the face. Characteristic positions on the face may be specific points of the parts such as eyes, a nose, and a mouth.

In a case where an obtained video is similar to a synthetic video synthesized by using a still image, the obtained video is likely to be a fake video. In the present example embodiment, this property is used to determine whether or not a video is fake. That is, in the present example embodiment, the synthetic video is generated by using the still image, and the obtained video is compared with the synthetic video, thereby determining whether or not the obtained video is a fake video.

### [2-2: Configuration of Information Processing Apparatus 2]

FIG. 2 is a block diagram illustrating a configuration of the information processing apparatus 2 in the second example embodiment. As illustrated in FIG. 2, the information processing apparatus 2 includes an arithmetic apparatus 21 and a storage apparatus 22. Furthermore, the information processing apparatus 2 may include a communication apparatus 23, an input apparatus 24, and an output apparatus 25. The information processing apparatus 2, however, may not include at least one of the communication apparatus 23, the input apparatus 24, and the output apparatus 25. The arithmetic apparatus 21, the storage apparatus 22, the communication apparatus 23, the input apparatus 24, and the output apparatus 25 may be connected via a data bus 26.

The arithmetic apparatus 21 includes, for example, at least one of a CPU (Central Processing Unit), a GPU (Graphics Processing Unit), and a FPGA (Field Programmable Gate Array). The arithmetic apparatus 21 reads a computer program. For example, the arithmetic apparatus 21 may read a computer program stored in the storage apparatus 22. For example, the arithmetic apparatus 21 may read a computer program stored in a computer-readable and non-transitory recording medium, by using a not-illustrated recording medium reading apparatus provided in the information processing apparatus 2 (e.g., the input apparatus 24 described later). The arithmetic apparatus 21 may acquire (i.e., download or read) a computer program from a not-illustrated apparatus disposed outside the information processing apparatus 2, via the communication apparatus 23 (or another communication apparatus). The arithmetic apparatus 21 executes the read computer program. Consequently, a logical function block for performing an operation to be performed by the information processing apparatus 2 is realized in the arithmetic apparatus 21. That is, the arithmetic apparatus 21 is allowed to function as a controller for realizing the logical functional block for performing an operation (or, in other words, processing) to be performed by the information processing apparatus 2.

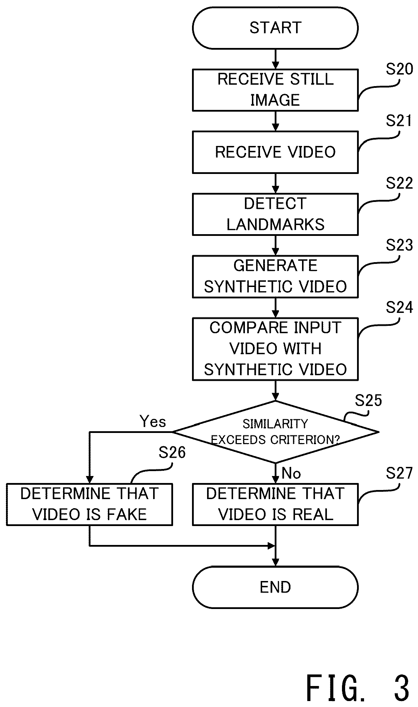

FIG. 2 illustrates an example of the logical function block realized in the arithmetic apparatus 21 in order to perform an information processing operation. As illustrated in FIG. 2, a detection unit 211 that is a specific example of the "detection unit" described in Supplementary Notes later, a generation unit 212 that is a specific example of the "generation unit" described in Supplementary Notes later, a determination unit 213 that is a specific example of the "determination unit" described in Supplementary Notes later, a still image receiving unit 214, and a video receiving unit 215, are realized in the arithmetic apparatus 21. One of the still image receiving unit 214 and the video receiving unit 215 may not be realized in the arithmetic apparatus 21. Details of operation of each of the detection unit 211, the generation unit 212, the determination unit 213, the still image receiving unit 214, and the video receiving unit 215 will be described later with reference to FIG. 3.

The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program. The storage apparatus 22 may store data that are stored for a long time by the information processing apparatus 2. The storage apparatus 22 may include at least one of arandom access memory (RAM), a read-only memory (ROM), a hard disk apparatus, a magneto-optical disk apparatus, a solid state drive (SSD), and a disk array apparatus. That is, the storage apparatus 22 may include a non-transitory recording medium.

The communication apparatus 23 is configured to communicate with an apparatus external to the information processing apparatus 2 via a not-illustrated communication network. The communication apparatus 23 may be a communication interface based on standards such as Ethernet (registered trademark), Wi-Fi (registered trademark), Bluetooth (registered trademark), and USB (Universal Serial Bus).

The input apparatus 24 is an apparatus that receives an input of information to the information processing apparatus 2 from an outside of the information processing apparatus 2. For example, the input apparatus 24 may include an operating apparatus (e.g., at least one of a keyboard, a mouse, and a touch panel) that is operable by an operator of the information processing apparatus 2. For example, the input apparatus 24 may include a reading apparatus that is configured to read information recorded as data on a recording medium that is externally attachable to the information processing apparatus 2.

The output apparatus 25 is an apparatus that outputs information to the outside of the information processing apparatus 2. For example, the output apparatus 25 may output information as an image. That is, the output apparatus 25 may include a display apparatus (a so-called display) that is configured to display an image indicating the information that is desirably outputted. That is, in the second example embodiment, the information processing apparatus 2 includes a display D as the output apparatus 25. For example, the output apparatus 25 may output information as audio/sound. That is, the output apparatus 25 may include an audio apparatus (a so-called speaker) that is configured to output audio/sound. For example, the output apparatus 25 may output information onto a paper surface. That is, the output apparatus 25 may include a printing apparatus (a so-called printer) that is configured to print desired information on the paper surface.

### [2-3: Information Processing Operation Performed by Information Processing Apparatus 2]

With reference to FIG. 3, the information processing operation performed by the information processing apparatus 2 will be described. FIG. 3 is a flowchart illustrating a flow of the information processing operation performed by the information processing apparatus 2.

As illustrated in FIG. 3, the still image receiving section 214 receives an input of a still image of a target person (step S20). The still image receiving section 214 may acquire a still image including a face area of the target person. The detection unit 211 may detect landmarks from the still image. The detection unit 211 may detect characteristic positions in the face area, as the landmarks, from the still image. The detection unit 211 may detect specific points of parts such as eyes, a nose, and a mouth, as the landmarks, from the still image.

The video receiving unit 215 receives an input of an input video of the target person (step S21). The video receiving unit 215 may acquire an input video including the face area of the target person. Each of input frames that constitute the input video may include the face area of the target person. Here, it is unclear whether the input video acquired by the video receiving unit 215 is a real/authentic video or a fake video, but the video receiving unit 215 may acquire an input video that captures the same target person as the one captured in the still image acquired by the still image receiving unit 214.

The detection unit 211 detects the landmarks from the input video that is inputted (step S22). The detection unit 211 may detect the landmarks from each of the input frames that constitute the input video. The detection unit 211 may detect positions that are equivalent to those of the landmarks detected from the still image, as the landmarks from the input video that is inputted.

The generation unit 212 generates a synthetic video by using the inputted still image and the landmarks (step S23). First, for each of the input frames that constitute the input video, the generation unit 212 generates a synthetic frame that is edited to match the landmarks of the still image with the landmarks of the corresponding input frame. Then, the generation unit 212 may connect the generated synthetic frames, thereby converting the still image into a video and generating the synthetic video.

The determination unit 213 compares the input video with the synthetic video (step S24), and the determination unit 213 determines whether similarity between the input video and the synthetic video exceeds a criterion (step S25). When the similarity between the input video and the synthetic video exceeds the criterion (the step S25: Yes), the determination unit 213 determines that the input video is a forged fake video (step S26). On the other hand, when the similarity between the input video and the synthetic video does not exceed the criterion (the step S25: No), the determination unit 213 determines that the input video is a real video that is not forged (step S27).

### [2-4: Technical Effect of Information Processing Apparatus 2]

The synthetic video generated by using the still image and the landmarks can capture the features of a fake video generated by using deepfake techniques/technologies or the like. The information processing apparatus 2 in the second example embodiment utilizes the property that, in a case where the features of the synthetic video generated by using the inputted still image are similar to those of the input video that is inputted, the input video is likely to be a fake video. The information processing apparatus 2 is allowed to accurately determine whether the input video is a real video that is not forged, or a forged fake video.

### [3: Third Example Embodiment]

Next, an information processing apparatus, an information processing system, an information processing method, and a recording medium according to a third example embodiment will be described. The following describes the information processing apparatus, the information processing system, the information processing method, and the recording medium according to the third example embodiment, by using an information processing apparatus 3 to which the information processing apparatus, the information processing system, the information processing method, and the recording medium according to the third example embodiment are applied.

### [3-1: Configuration of Information Processing Apparatus 3]

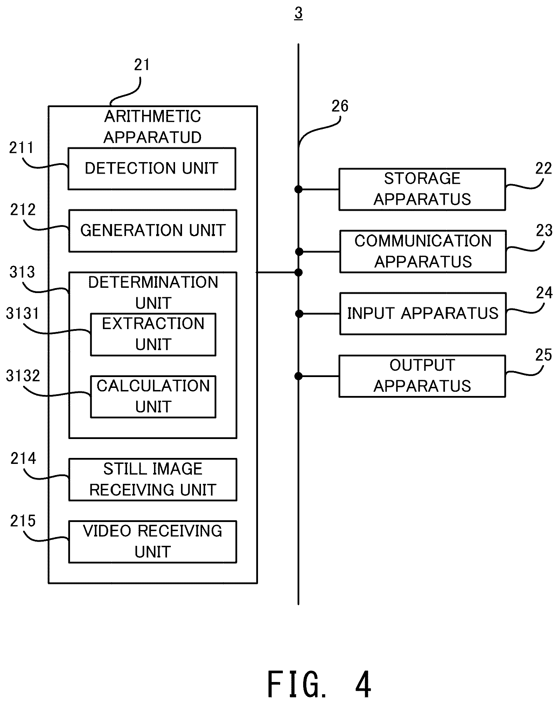

As illustrated in FIG. 4, the information processing apparatus 3 in the third example embodiment includes the arithmetic apparatus 21 and the storage apparatus 22, as in the information processing apparatus 2 in the second example embodiment. Furthermore, the information processing apparatus 3 in the third example embodiment may include the communication apparatus 23, the input apparatus 24, and the output apparatus 25, as in the information processing apparatus 2 in the second example embodiment. The information processing apparatus 3, however, may not include at least one of the communication apparatus 23, the input apparatus 24, and the output apparatus 25. The information processing apparatus 3 in the third example embodiment differs from the information processing apparatus 2 in the second example embodiment, in that a determination unit 313 includes an extraction unit 3131 and a calculation unit 3132. Other features of the information processing apparatus 3 may be the same as those of the information processing apparatus 2 in the second example embodiment. For this reason, a part differing from each of the example embodiments described above will be described in detail below, and a description of the other overlapping parts will be omitted as appropriate.

### [3-2: Information Processing Operation Performed by Information Processing Apparatus 3]

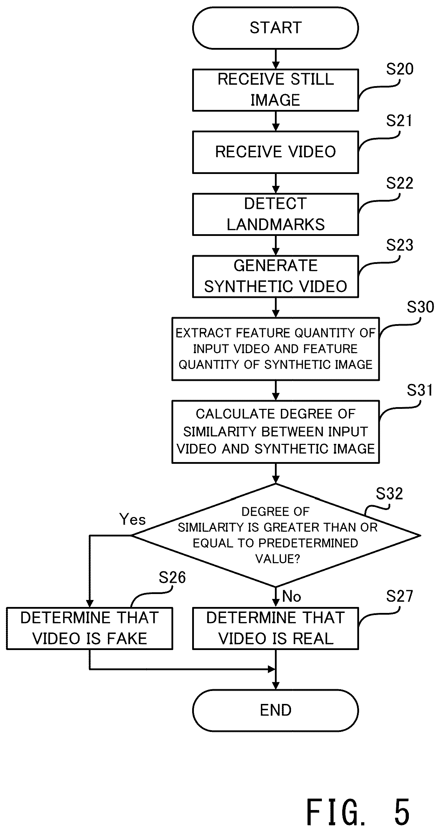

With reference to FIG. 5, the information processing operation performed by the information processing apparatus 3 will be described. FIG. 5 is a flowchart illustrating a flow of the information processing operation performed by the information processing apparatus 3.

As illustrated in FIG. 5, the still image receiving section 214 receives an input of the still image of the target person (step S20). The video receiving unit 215 receives an input of the input video of the target person (step S21). The detection unit 211 detects the landmarks from the input video that is inputted (step S22). The generation unit 212 generates the synthetic video by using the inputted still image and the landmarks (step S23).

The extraction unit 3131 extracts input features of a facial image included in the input video and synthetic features of a facial image included in the synthetic video (step S30). The extraction unit 3131 may extract the input features and the synthetic features, by using a features extraction model. The features extraction model may be a model that outputs a features when a facial image is inputted. The features extraction model may be a model used in a face authentication mechanism. The features extraction model may be a model constructed by machine learning. The extraction unit 3131 may extract the input features of the facial image included in each of the input frames that constitute the input video, and may extract the synthetic features of the facial image included in each of synthetic frames corresponding to input frames that constitute the synthetic video.

The calculation unit 3132 calculates a degree of similarity between the input features and the synthetic features (step S31). The calculation unit 3132 may calculate the degree of similarity between the input features and the synthetic features, for each of the input frames. The calculation unit 3132 may calculate cosine similarity between the input features and the synthetic features. The calculation unit 3132 may also calculate the Euclidean distance between the input features and the synthetic features.

The determination unit 313 determines whether the degree of similarity between the input features and the synthetic features is greater than or equal to a predetermined value (step S32). For example, in a case where the calculation unit 3132 calculates the cosine similarity, the determination unit 313 may determine whether the cosine similarity is close to "1" to a predetermined degree or more. In a case where the calculation unit 3132 calculates the Euclidean distance, the determination unit 313 may determine whether the Euclidean distance is close to a predetermined distance.

In addition, for example, the determination unit 313 may determine whether a quantity indicating the average/mean of the degrees of similarity in the input frames that constitute the input video is greater than or equal to a predetermined value. In addition, the determination unit 313 may determine whether the number of input frames in which the degree of similarity in each of the input frames that constitute the input video is greater than or equal to a predetermined value, is greater than or equal to a predetermined number.

When the degree of similarity between the input features and the synthetic features is greater than or equal to the predetermined value (the step S32: Yes), the determination unit 313 determines that the input video is a forged fake video (step S26). On the other hand, when the degree of similarity between the input features and the synthetic features is less than the predetermined value (the step S25: No), the determination unit 313 determines that the input video is a real video that is not forged (step S27).

### [3-3: Technical Effect of Information Processing Apparatus 3]

The information processing apparatus 3 in the third example embodiment determines whether or not the input video is a fake video, based on the degree of similarity between the features of the input video and the synthetic video synthesized by using the characteristic positions, thereby enabling acute determination.

### [4: Fourth Example Embodiment]

Next, an information processing apparatus, an information processing system, an information processing method, and a recording medium according to a fourth example embodiment will be described. The following describes the information processing apparatus, the information processing system, the information processing method, and the recording medium according to the fourth example embodiment, by using an information processing apparatus 4 to which the information processing apparatus, the information processing system, the information processing method, and the recording medium according to the fourth example embodiment are applied.

### [4-1: Information Processing Operation Performed by Information Processing Apparatus 4]

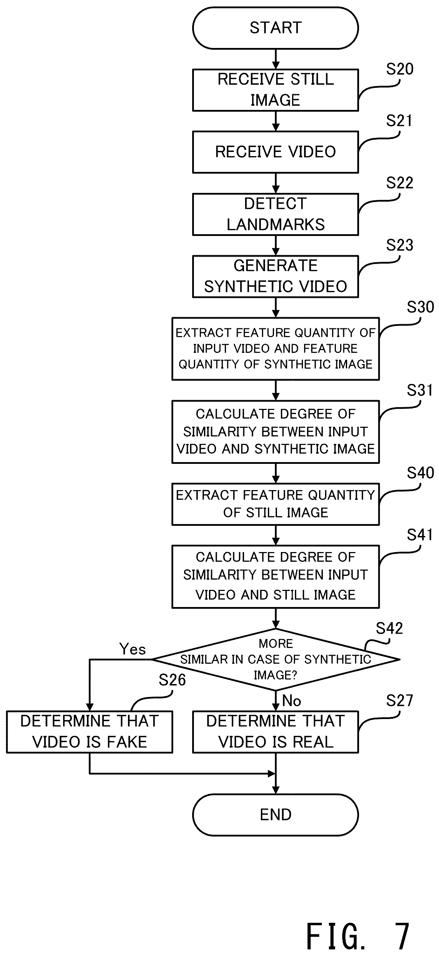

With reference to FIG. 7, the information processing operation performed by the information processing apparatus 4 will be described. FIG. 7 is a flowchart illustrating a flow of the information processing operation performed by the information processing apparatus 4.

As illustrated in FIG. 7, the still image receiving section 214 receives an input of the still image of the target person (step S20). The video receiving unit 215 receives an input of the input video of the target person (step S21). The detection unit 211 detects the landmarks from the input video that is inputted (step S22). The generation unit 212 generates the synthetic video by using the inputted still image and the landmarks (step S23).

An extraction unit 4131 extracts the input features of the facial image included in the input video and the synthetic features of the facial image included in the synthetic video (step S30). A calculation unit 4132 calculates the degree of similarity between the input features and the synthetic features (step S31).

The extraction unit 4131 extracts features of a still image (step S40). The calculation unit 4132 calculates a degree of similarity between the input features and the features of the still image (step S41).

A determination unit 413 determines whether the degree of similarity between the input features and the synthetic features is greater than or equal to the degree of similarity between the input features and the features of the still image (step S42). When the degree of similarity between the input features and the synthetic features is greater than or equal to the degree of similarity between the input features and the features of the still image (the step S42: Yes), the determination unit 413 determines that the input video is a fake video (step S26). That is, the determination unit 413 determines that the input video is a synthesized video in a case where similarity between the input video and the synthetic video exceeds similarity between the input video and the still image. On the other hand, when the degree of similarity between the input features and the synthetic features is not greater than or equal to the degree of similarity between the input features and the features of the still image (the step S42: No), the determination unit 413 determines that the input video is a real video (step S27).

### [4-2: Technical Effect of Information Processing Apparatus 4]

In many cases, a degree of similarity between a video and a still image in which the same target is captured, is higher than a degree of similarity between videos synthesized based on the same still image. Using this property, the information processing apparatus 4 in the fourth example embodiment is allowed to accurately determine whether or not the input video is a fake video.

### [5: Fifth Example Embodiment]

Next, an information processing apparatus, an information processing system, an information processing method, and a recording medium according to a fifth example embodiment will be described. The following describes the information processing apparatus, the information processing system, the information processing method, and the recording medium according to the fifth example embodiment, by using an information processing system 5 to which the information processing apparatus, the information processing system, the information processing method, and the recording medium according to the fifth example embodiment are applied.

### [5-1: Electronic Know Your Customer]

The use of online identity verification, such as electronic Know Your Customer (eKYC), is increasing. In many cases, identity verification for opening bank accounts and issuing credit cards is performed online using eKYC, rather than in person.

eKYC may be performed at an image capture location prepared for eKYC services, for example. Furthermore, eKYC may be performed at any location by using a terminal apparatus that is usable by the target person, such as a smartphone equipped with an image capture function and a communication function.

An example of an eKYC flow will be described below.

(step 1) Still image capture: Capture one side of a facial photograph on an identification document such as a driver's license and My Number card in Japan. The other side of the identification document and the thickness of the identification document may also be captured.
(step 2) Video capture: Give instructions on such an action as facing forward and then turning to the right, thereby capturing images of an actual person performing the action.
(step 3) Facial image verification: Perform verification on whether or not a target person in the facial photograph on the identification document and a target person in front of the camera are the same person. In the facial image verification, features are extracted from the facial photograph, features are extracted from a face area detected from a video, and the extracted feature quantities are compared to determine whether a degree of similarity between the feature quantities is greater than or equal to a predetermined value.
(step 4) Impersonation determination: Determines whether the target person is impersonating someone else, based on a response to the instructions on the action.
(step 5) Authentication of identity: Determines whether or not identity verification is successful, based on results of the steps 3 and 4.

As described above, there are techniques/technologies for synthesizing an image of a person, based on information from a single facial photograph of the person, which poses a threat of impersonation in eKYC. Accurate determination of whether or not a video is fake, is an important issue for enhancing the reliability of services such as eKYC. An input to eKYC includes a facial image on an official document that may be information for synthesizing a fake video. That is, as an impersonation/spoofing attack against eKYC, it is conceivable to synthesize and input a fake video, based on limited information like a facial image on an official document such as a driver's license and My Number card in Japan.

The information processing system 5 in the fifth example embodiment may be applied to online identity verification such as eKYC. The information processing system 5 in the fifth example embodiment may determine whether or not an input video is a fake video with impersonation, by comparing the input video with a synthetic video synthesized on the basis of a facial photograph on an official document such as a driver's license and My Number card in Japan, in the information processing system 5.

### [5-2: Configuration of Information Processing System 5]

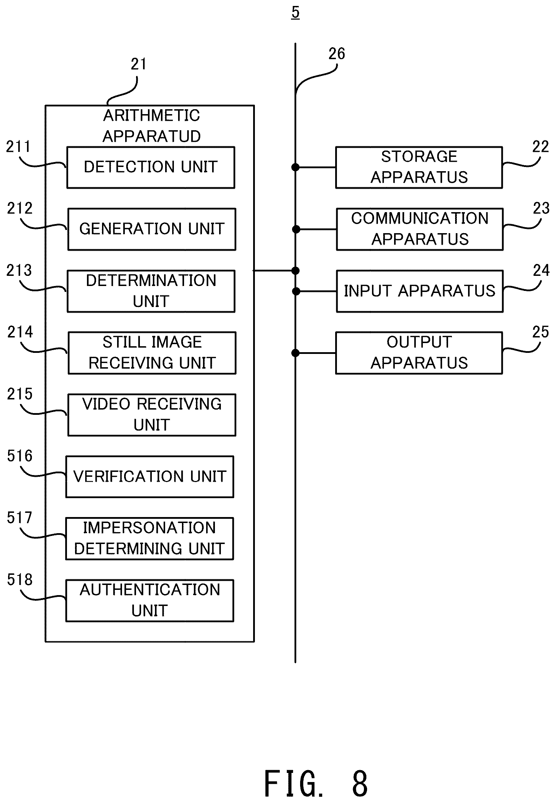

As illustrated in FIG. 8, the information processing system 5 in the fifth example embodiment includes the arithmetic apparatus 21 and the storage apparatus 22, as in the information processing apparatus 2 in the second example embodiment to the information processing apparatus 4 in the fourth example embodiment. Furthermore, the information processing system 5 in the fifth example embodiment may include the communication apparatus 23, the input apparatus 24, and the output apparatus 25, as in the information processing apparatus 2 in the second example embodiment to the information processing apparatus 4 in the fourth example embodiment. The information processing system 5, however, may not include at least one of the communication apparatus 23, the input apparatus 24, and the output apparatus 25. The information processing system 5 in the fifth example embodiment differs from the information processing apparatus 2 in the second example embodiment to the information processing apparatus 4 in the fourth example embodiment, in that a verification unit 516, an impersonation determining unit 517, and an authentication unit 518 are further realized in the arithmetic apparatus 21. Other features of the information processing system 5 may be the same as those of at least one of the information processing apparatus 2 in the second example embodiment to the information processing apparatus 4 in the fourth example embodiment. For this reason, a part differing from each of the example embodiments described above will be described in detail below, and a description of the other overlapping parts will be omitted as appropriate.

The information processing system 5 may be a system that is configured to perform biometric authentication of the target person. The information processing system 5 may be an apparatus that performs a verification operation using images and that determines whether or not the target person is impersonating someone else by using images, thereby authenticating the target person.

### [5-3: Information Processing Operation Performed by Information Processing System 5]

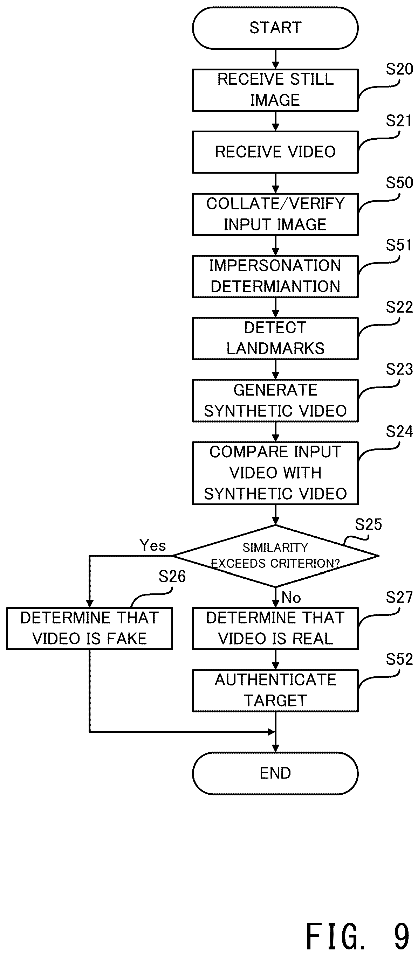

With reference to FIG. 9, the information processing operation performed by the information processing system 5 will be described. FIG. 9 is a flowchart illustrating a flow of the information processing operation performed by the information processing system 5.

As illustrated in FIG. 9, the still image receiving section 214 receives an input of the still image of the target person (step S20). In the fifth example embodiment, the still image may be a facial photograph on an official document such as a driver's license and My Number card in Japan. The step S20 may correspond to the step 1 in an example of the eKYC flow described above. In a case where the official document is a My Number Card, the verification unit 516 may acquire the facial image stored in an integrated circuit incorporated in the My Number Card. The verification unit 516 may acquire the facial image in the My Number Card read by using a short-range wireless communication function installed in a smartphone carried by the target person, for example. The video receiving unit 215 receives an input of the input video of the target person (step S21). The step S21 may correspond to the step 2 in an example of the eKYC flow described above.

The verification unit 516 may verify the facial image of the target person (step S50). In a case where the still image is a facial photograph on an official document such as a driver's license and My Number card in Japan, the verification unit 516 may verify the target person captured in the still image with the target person captured in the input video. In this instance, in a case of a failure in the verification between the target person captured in the still image with the target person captured in the input video, the information processing operation may be ended. Alternatively, the verification unit 516 may verify the received still image with a registered facial image registered in advance. Alternatively, the verification unit 516 may verify the received input video with the registered facial image registered in advance. That is, the verification unit 516 may verify at least one of the target person captured in the still image and the target person captured in the input video. The step S50 may correspond to the step 3 in an example of the eKYC flow described above.

Since the still image is similar to the synthetic video synthesized on the basis of the still image, the verification between the still image and the input video is likely to be successful, even when the input vide is a fake video.

The impersonation determining unit 517 performs impersonation determination by using the input video (step S51). In the fifth example embodiment, the input video may be used to determine whether or not it is a fake video, and also be used for the impersonation determination. For example, the input video may be a video that depicts an action performed by the target person in response to the instruction from the information processing system 5. The information processing system 5 may give instructions on the direction of a face, the direction of a line of sight, or the position of the face. The information processing system 5 may guide the line of sight. The information processing system 5 may give instructions on a gesture. The impersonation determining unit 517 may perform active liveness determination by using the input video. The step S51 may correspond to the step 4 in an example of the eKYC flow described above.

The detection unit 211 detects the landmarks from the input video that is inputted (step S22). The generation unit 212 generates the synthetic video by using the inputted still image and the landmarks (step S23). The determination unit 213 compares the input video with the synthetic video (step S24), and the determination unit 213 determines whether similarity between the input video and the synthetic video exceeds the criterion (step S25). When the similarity between the input video and the synthetic video exceeds the criterion (the step S25: Yes), the determination unit 213 determines that the input video is a forged fake video (step S26). On the other hand, when the similarity between the input video and the synthetic video does not exceed the criterion (the step S25: No), the determination unit 213 determines that the input video is a real video that is not forged (step S27).

When the determination unit 213 determines that the input video is not a fake video, the authentication unit 518 authenticates the target person, based on a verification result obtained by the verification unit 516 and a determination result obtained by the impersonation determining unit 517 (step S52). In addition, the authentication unit 518 may authenticate the target person, on the condition that the determination unit 213 determines that the similarity between the input video and the synthetic video does not exceed the criterion and that the impersonation determining unit 517 determines that the target person performs the action following the instructions. A case where the authentication of the target person by the authentication unit 518 is successful, may be a case where the identity of the target person may be verified. The step S52 may correspond to the step 5 in an example of the eKYC flow described above.

Note that an impersonation determining operation in the step S51 and a fake video determining operation from the step S22 to the step S27, which are after the verification operation in the step S50, may be performed in parallel.

### [5-4: Technical Effect of Information Processing System 5]

Since the information processing system 6 in the sixth example embodiment determines whether or not the input video is a fake video, it is possible to accurately perform identity verification.

### [6: Supplementary Notes]

With respect to the example embodiments described above, the following Supplementary Notes are further disclosed.

### [Supplementary Note 1]

An information processing apparatus including:
a detection unit that detects landmarks from an input video that is inputted;
a generation unit that generates a synthetic video by using a still image that is inputted, and the landmarks; and
a determination unit that determines whether or not the input video is a synthesized video, based on comparison between the input video and the synthetic video.

### [Supplementary Note 2]

The information processing apparatus according to Supplementary Note 1, wherein the determination unit that determines that the input video is a synthesized video in a case where similarity between the input video and the synthetic video exceeds a criterion.

### [Supplementary Note 3]

The information processing apparatus according to Supplementary Note 1 or 2, wherein the determination unit includes:
an extraction unit that extracts input features of a facial image included in the input video and synthetic features of a facial image included in the synthetic video; and
a calculation unit that calculates a degree of similarity between the input features and the synthetic features.

### [Supplementary Note 4]

The information processing apparatus according to Supplementary Note 1 or 2, wherein the determination unit determines that the input video is a synthesized video in a case where similarity between the input video and the synthetic video exceeds similarity between the input video and the still image.

### [Supplementary Note 5]

An information processing system including:
an information processing apparatus, including:
   a detection unit that detects landmarks from an input video that is inputted;
   a generation unit that generates a synthetic video by using a still image that is inputted, and the landmarks; and
   a determination unit that determines whether or not the input video is a synthesized video, based on comparison between the input video and the synthetic video;
a verification unit that verifies at least one of a target captured in the still image and a target captured in the input video; and
an authentication unit that authenticates the target, based on at least one of a determination result of the determination unit and a verification result of the verification unit.

### [Supplementary Note 6]

An information processing method including:
detecting landmarks from an input video that is inputted;
generating a synthetic video by using a still image that is inputted, and the landmarks; and
determining whether or not the input video is a synthesized video, based on comparison between the input video and the synthetic video.

### [Supplementary Note 7]

A recording medium on which a computer program that allows a computer to execute an information processing method is recorded, the information processing method including:
detecting landmarks from an input video that is inputted;
generating a synthetic video by using a still image that is inputted, and the landmarks; and
determining whether or not the input video is a synthesized video, based on comparison between the input video and the synthetic video.

The present disclosure is allowed to be changed, if desired, without departing from the essence or spirit of this disclosure which can be read from the claims and the entire specification. An information processing apparatus, an information processing system, an information processing method, and a recording medium with such changes are also intended to be within the technical scope of the present disclosure.

### Description of Reference Codes

1, 2, 3, 4 Information processing apparatus
11, 211 Detection unit
12, 212 Generation unit
13, 213, 313, 413 Determination unit
214 Still image receiving unit
214 Video receiving unit
3131, 4131 Extraction unit
3132, 4132 Calculation unit
5 Information processing system
516: Verification unit
517: Impersonation determining unit
518: Authentication unit

## Claims

1. An information processing apparatus comprising:
a detection unit that detects landmarks from an input video that is inputted;
a generation unit that generates a synthetic video by using a still image that is inputted, and the landmarks; and
a determination unit that determines whether or not the input video is a synthesized video, based on comparison between the input video and the synthetic video.

2. The information processing apparatus according to claim 1, wherein the determination unit that determines that the input video is a synthesized video in a case where similarity between the input video and the synthetic video exceeds a criterion.

3. The information processing apparatus according to claim 1 or 2, wherein the determination unit includes:
an extraction unit that extracts input features of a facial image included in the input video and synthetic features of a facial image included in the synthetic video; and
a calculation unit that calculates a degree of similarity between the input features and the synthetic features.

4. The information processing apparatus according to claim 1 or 2, wherein the determination unit determines that the input video is a synthesized video in a case where similarity between the input video and the synthetic video exceeds similarity between the input video and the still image.

5. An information processing system comprising:
an information processing apparatus, including:
a detection unit that detects landmarks from an input video that is inputted;
a generation unit that generates a synthetic video by using a still image that is inputted, and the landmarks; and
a determination unit that determines whether or not the input video is a synthesized video, based on comparison between the input video and the synthetic video;
a verification unit that verifies at least one of a target captured in the still image and a target captured in the input video; and
an authentication unit that authenticates the target, based on at least one of a determination result of the determination unit and a verification result of the verification unit.

6. An information processing method comprising:
detecting landmarks from an input video that is inputted;
generating a synthetic video by using a still image that is inputted, and the landmarks; and
determining whether or not the input video is a synthesized video, based on comparison between the input video and the synthetic video.

7. A recording medium on which a computer program that allows a computer to execute an information processing method is recorded, the information processing method including:
detecting landmarks from an input video that is inputted;
generating a synthetic video by using a still image that is inputted, and the landmarks; and
determining whether or not the input video is a synthesized video, based on comparison between the input video and the synthetic video.
